# EUROPEAN PATENT APPLICATION

(11) **EP 1 657 774 A1**
(43) Date of publication of application: **17.05.2006**
(21) Application number: 05023853.4
(22) Date of filing: 02.11.2005
(51) Int. Cl.: H01M 8/18, H01M 8/04

(54) **Regenerative energetic fuel-cell system and process for controlling and managing such system**

(30) Priority: 04.11.2004 IT to20040762
(71) Applicant: Environment Park S.P.A. Parco Scientifico Tecnologico Per l'Ambiente, 10121 Torino (IT)
(72) Inventor: Gianolio, Giuseppe, 10144 Torino (IT); Rosso, Ilaria, 10144 Torino (IT)
(74) Representative: Garavelli, Paolo

(57) **Abstract**

A fuel-cell energetic system (1) is disclosed, comprising at least one pile (15) with fuel cells, means for supplying hydrogen (9), water (10) and air (11) to the pile (15), means for expelling reaction products (17), means for producing hydrogen (3) and controlling and managing means (19); a process for controlling and managing an energetic system (1) is further disclosed.

## Description

The present invention refers to an energetic fuel-cell system and to a process for controlling and managing such system.

Fuel-cell systems are known in the art. A fuel cell is an electro-chemical device which enables the reaction between hydrogen and oxygen to' produce electricity and water. The basic process is extremely efficient and the fuel cells directly supplied with hydrogen do not substantially produce polluting products. Moreover, since the fuel cells can be assembled in piles with various sizes, energetic systems can be realised which are able to develop the most adequate electric power for various applications, thereby complying with numerous needs dictated by the industry.

Energetic systems proposed by the known prior art however provide for the production of electric energy through the fuel cells by using hydrogen which is already separated from water. This obviously results in a disadvantage, since it unavoidably requires the creation of a dedicated system for producing hydrogen which ensures its delivery to the energetic system.

Therefore, object of the present invention is solving the above prior art problems by providing an energetic fuel-cell system equipped with an integrated system for producing hydrogen from water.

Moreover, an object of the present invention is providing a controlling and managing process, which, by monitoring and checking the status of various parameters in an energetic fuel-cell system, allows its correct operation under any condition.

The above and other objects and advantages of the invention, which will result from the following description, are reached with an energetic fuel-cell system as disclosed in claim 1. Moreover, the above and other objects and advantages of the invention are reached with a process for controlling and managing such system as disclosed in claim 19. Preferred embodiments and non-trivial variations of the present invention are the subject-matter of the dependent claims.

The present invention will be better described by some preferred embodiments thereof, provided as a non-limiting example, with reference to the enclosed drawings, in which:
- FIG. 1 shows a block diagram which schematically shows the main component parts of the energetic fuel-cell system according to the present invention;
- FIG. 2 shows a diagram showing a preferred embodiment of the energetic system according to the present invention; and
- FIG. 3 shows an example of a screen created by a computer program which realises the process according to the present invention.

The energetic system 1 according to the present invention, as can be seen in more detail herein below, substantially comprises all the hydrogen chain, from its production to the generation of electric energy by means of at least one pile of fuel cells using hydrogen produced inside the system 1 itself.

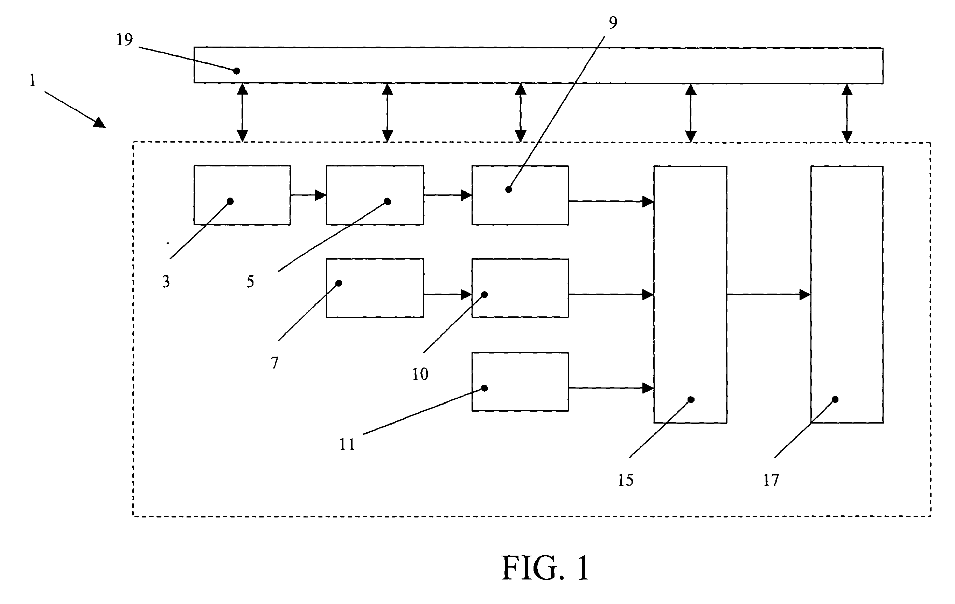

With reference in particular to FIG. 1, it is possible to note that the fuel-cell energetic system 1 according to the present invention comprises:
- means for producing hydrogen 3 starting from water;
- at least one pile of fuel cells 15;
- means for supplying hydrogen 9, water 10 and air 11 to the pile 15; preferably, the means for supplying hydrogen 9 comprise means for storing hydrogen 5, and the means for supplying water 10 comprise endono means for storing water 7;
- means for expelling the reaction products 17; and
- controlling and managing means 19 adapted to interact with the other system 1 components (operation schematically shown in FIG. 1 by means of double-pointed arrows representing the feedbacks between controlling and managing means 19 and other system 1 components which have been globally identified, for a better understanding in the figure, by a dashed rectangle) to measure the value of certain parameters and possibly suitably take care of correcting them, as will be seen below, for guaranteeing a correct operation of the energetic system 1.

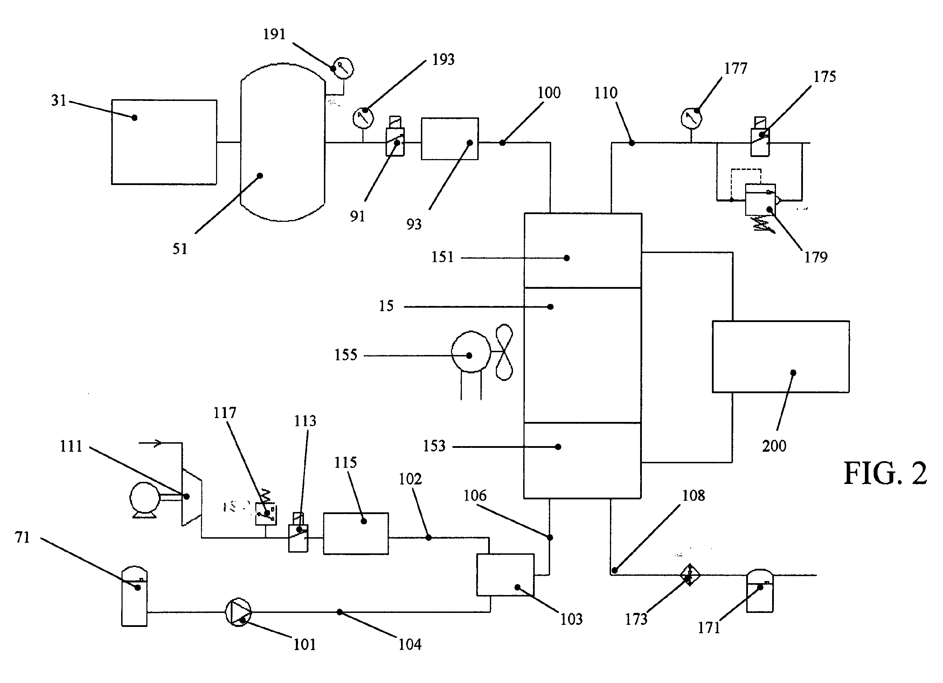

With reference now to FIG. 2, it is possible to note a technical diagram showing a preferred embodiment of the above-described energetic system 1. As previously mentioned, one of the particularly advantageous and innovative aspects of the energetic system 1 is comprising the means for producing hydrogen 3 which are perfectly integrated with other system 1 components: such means are preferably an electrolyzer 31 which is able to produce hydrogen (H₂) from demineralised water electrolitically through multi-layer electrodes. The preferred electrolyzer 31 according to the present invention provides a maximum flow-rate of 600 Nml/min of pure hydrogen 99.9995% at a maximum pressure of 4 bars. Once produced, the hydrogen is supplied to the means for storing hydrogen 5 which comprise a first tank 51 adapted to contain the pressurised hydrogen. The hydrogen pressure inside the first tank 51 is monitored by the controlling and managing means 19 through a first pressure transducer 191. The produced hydrogen is then supplied to the pile of fuel cells 15 from the first tank 51 through the means for supplying hydrogen 9; such means preferably comprise a first solenoid valve 91 and a first flow-rate controller 93 arranged in series along a first duct 100 connecting the first tank 51 with an anode 151 of the pile of fuel cells 15. The first solenoid valve 91, normally closed, allows controlling the hydrogen supply to the pile 15 by opening or closing its flow in the first duct 100, and the first flow-rate controller 93 allows supplying the pile 15 with the required hydrogen volumetric flow-rate by dividing its flow and possibly interacting with the first solenoid valve 91 and the controlling and managing means 19; the controlling and managing means 19, in fact, measure an hydrogen pressure upstream of the first solenoid valve 91, for example through a second analogue pressure transducer 193, using the value of such measure as a safety parameter: when the pressure measuring value upstream of the first flow-rate controller 93 falls below a certain threshold (for example two relative bars) defined as lower operating limit, the controlling and managing means 19 take the energetic system 1 under a safety condition described below.

To a cathode 153 of the pile of fuel cells 15, instead, suitably humidified compressed air is supplied: the means for supplying air 11, in fact, comprise at least one compressor 111 which compresses air sucked from the environment, preferably up to a pressure of 8 bars with a flow-rate of 200 l/min, which is stored in a second compressed air tank (not shown). The air flow going out of the second compressed air tank for supplying the pile 15 is instead managed substantially similarly to the hydrogen flow: in fact, the means for supplying air 11 further comprise a second solenoid valve 113 and a second flow-rate controller 115 arranged in series along a second duct 102 connecting the second tank with the cathode 153 of the pile of fuel cells 15. The second solenoid valve 113, normally closed, therefore allows controlling the air supply to the pile 15 by opening or closing its flow in the second duct 102, and the second flow-rate controller 115 allows supplying the pile 15 with the required air volumetric flow-rate di air by dividing its flow and possibly interacting with the second solenoid valve 113 and the controlling and managing means 19; the controlling and managing means 19 in fact, through, for example, an electromechanical pressure sensor 117, provide an electric consent for opening the second solenoid valve 113 and by interacting with the second flow-rate controller 115 detect an air pressure value, using such value as a safety parameter: when the pressure measuring value upstream of the second flow-rate controller 115 falls below a certain threshold (for example two relative bars) defined as lower operating limit, the controlling and managing means 19 take back the system 1 under the safety condition mentioned below.

However, before its entry in the cathode 153 of the pile 15, air must be preferably humidified: such operation occurs with the help of the means for storing water 7 and for supplying water 10. The means for storing water 7 therefore comprise a third water tank 71 in which air-humidifying water is stored, preferably distilled water, and the means for supplying water 10 comprise at least one peristaltic pump 101 and an air/water mixer 103, preferably of the pin-type, arranged downstream of the third water tank 71 along a third duct 104. To the air/water mixer 103 therefore, the second air duct 102 and the third water duct 104 are connected for performing air humidification; from the mixer 103 therefore a fourth duct 106 goes out which takes humidified air to the cathode 153 of the pile 15.

The pile of fuel cells 15, in the preferred embodiment shown, is a pile with twenty fuel cells with Nafion® polymeric membrane 112, bipolar graphite plates and platinum catalyst. With such characteristics, the maximum power delivered by the pile 15 is 200 Watts with a maximum on-load voltage (16.6 A and controlled by the controlling and managing means 19) equal to 12 VDC, about 0.6 VDC per cell; should no user load be connected to the pile 15, the generated power is dissipated, preferably, by means of an electronic load 200. The operating pressure of the pile 15 is about 1 absolute bar. Moreover, the pile is preferably provided for operating with its hydrogen side in dead end, namely with its output plugged; in this way an almost complete use of the inserted fuel, and therefore an efficiency improvement, is guaranteed.

Moreover, the pile 15 should preferably operate at a temperature included between the ambient one and 60°C; since the association reaction of hydrogen and oxygen is exothermic, it therefore produces heat, and it is necessary, once having reached the operating temperature, to cool the pile 15; such cooling, in the preferred embodiment, occurs through forced venting; for such purpose, the temperature value of the pile 15 is fetched by the controlling and managing means 15 through a first thermocouple (not shown) for driving turning on and off of a cooling fan 155 of the pile 15.

Moreover, in order not to damage the membrane of the pile 15 and not to impair its operation, it is necessary not to exceed a pressure difference between anode 151 and cathode 153 equal to 0.2 bars; this value is therefore controlled by the controlling and managing means 19 which drive the supplying solenoid valves 91, 113 and a draining solenoid valve 175 mentioned below.

Products of reactions occurred inside the pile 15 are therefore removed by the means for expelling the reaction products 17; in particular, the exhaust air going out of the cathode 153 of the pile 15 is sent through a fourth expelling duct 108 to an exhaust tank in which it deposits water formed inside the cell as reaction product and then re-inserted in the environment. It is further preferable that the controlling and managing means 19 check the outlet air temperature by means of a second thermocouple 173.

As already previously mentioned, the pile 15 operates in dead end mode. Therefore, for expelling the exhaust hydrogen, the means for expelling the reaction products 17 further comprise the third draining solenoid valve 175, normally open, along a fifth exhaust duct 110 which stops the hydrogen flow going out and, preferably, is periodically opened at intervals with a draining frequency controlled by the controlling and managing means 19: in this way, it is guaranteed that the maximum allowable pressure difference between anode 151 and cathode 153 (0.2 bars) of the pile 15 is not exceeded, and it is avoided that the anode of the pile 15 is flooded due to a possible water accumulation. The hydrogen flow going out is therefore sent to the environment.

Due to safety reasons and for preserving the pile 15 from possible overpressures, the controlling and managing means 19 comprise a third pressure transducer 177 which monitors the outlet exhaust hydrogen pressure; such pressure value is used, by the controlling and managing means 19, as reference for driving the opening of the third draining solenoid valve 175 if the measured pressure value reaches a maximum allowed threshold. A further check is moreover pertaining to the controlling and managing means 19 through a second electromechanical pressure sensor 179 arranged in parallel with the third draining solenoid valve 175 which provides an electric consent so that the third draining solenoid valve 175 is closed only if the outlet exhaust hydrogen pressure is below an allowed threshold; on the contrary, if the outlet exhaust hydrogen pressure exceeds the allowed threshold, the second electromechanical pressure sensor 179 imposes that the third draining solenoid valve 175 remains open.

As previously mentioned, when the controlling and managing means 19 detect that any one of the parameters measured and/or controlled by them are not complying with a predefined threshold value or a predefined range of values, they intervene by automatically taking back the energetic system 1 to a safety condition; such safety condition preferably provides that the solenoid valves 91 and 113 are closed and the third draining solenoid valve 175 is open.

The present invention further refers to a process for controlling and managing an energetic fuel-cell system, in particular an energetic system 1 as previously described, which, by interacting with the controlling and managing means 19 and therefore both with the measuring devices (transducers, pressure sensors, etc.) which they comprise, and with the control device which they drive (solenoid valves, flow-rate controllers, etc.), allows the system itself to correctly operate.

In particular, the process for controlling and managing the energetic system 1 comprises the steps of:
- detecting flow-rate and pressure values of the means for producing hydrogen 3, in particular the hydrolizer 31;
- detecting hydrogen flow-rate values of the means for supplying hydrogen 9; in particular, the hydrogen pressure value inside the first tank 51 is detected by the first pressure transducer 191 (it is further possible to provide for the direct measure of the amount of hydrogen contained in the first tank 51, or to indirectly deduce its value from the detected pressure value) while the hydrogen pressure value upstream of the first solenoid valve 91 is detected by the second analogue pressure transducer 193;
- comparing pressure and flow-rate values detected by the means for producing hydrogen 3 and the means for supplying hydrogen 9 with threshold values;
- checking pressure and flow-rate of the means for producing hydrogen 3 and/or the means for supplying hydrogen 5 if the detected pressure and flow-rate values are not complying with the thresholds; in particular such check occurs by taking back the energetic system 1 in the safety condition;
- detecting water flow-rate values from the means for supplying water 10;
- comparing the flow-rate values of the means for supplying water 10 with con threshold values;
- checking the flow-rate of the means for supplying water 10 if the detected flow-rate values are not complying with the thresholds; in particular such check occurs by taking back the energetic system 1 in the safety condition;
- detecting air flow-rate values of the means for supplying air 11; in particular the air pressure value is detected by the second flow-rate controller 115;
- comparing the detected flow-rate values of the means for supplying air 11 with threshold values;
- checking the flow-rate of the means for supplying air 11 if the detected pressure and flow-rate values are not complying with the thresholds; in particular such check occurs by taking back the energetic system 1 in the safety condition;
- detecting the temperature values of the pile 15; in particular, the temperature value of the pile 15 is detected through the first thermocouple;
- detecting ambient temperature values;
- comparing the detected temperature values of the pile 15 with threshold values and/or with ambient temperature values;
- checking the temperature of the pile 15 if the detected temperature values are not complying with the thresholds; in particular such check occurs by driving the cooling fan 155 to turn on or off;
- detecting voltage, current and power values of the pile 15;
- comparing voltage, current and power values of the pile 15 with threshold values;
- checking voltage, current and power of the pile 15 if the detected voltage, current and power values are not complying with the thresholds; in particular such check occurs by taking back the energetic system 1 in the safety condition and by electrically disconnecting the electronic load 200;
- detecting temperature and pressure values of the means for expelling the reaction products 17; in particular the temperature value of air going out of the cathode 153 of the pile 15 is detected by the second thermocouple 173 and the pressure value of the exhaust hydrogen going out of the anode 151 of the pile 15 is detected by the third pressure transducer 177;
- comparing the detected temperature and pressure values of the means for expelling the reaction products 17 with threshold values;
- checking temperature and pressure of the means for expelling the reaction products 17 if the detected temperature and flow-rate values are not complying with the thresholds; in particular such check occurs by taking back the energetic system 1 in the safety condition;
- detecting the pressure values of the pile 15;
- comparing the detected pressure values of the pile 15 with threshold values;
- checking the pressure of the pile 15 if the detected pressure values are not complying with alle thresholds; in particular such check occurs by taking back the energetic system 1 in the safety condition.

Therefore, when one of the detected values according to the above-described process is not complying with its own threshold values, the energetic system 1 is automatically taken back in the safety condition.

The process according to the present invention could further provide the steps of:
- starting the energetic system 1 in which the solenoid valves 91, 113 are opened allowing the inflow of hydrogen and air to the pile 15;
- stopping the energetic system 1 in which the solenoid valves 91, 113 are closed stopping the inflow of hydrogen and air to the pile 15;
- emergency stopping the energetic system 1 in which all components of the system 1 are de-activated.

In addition, it is possible to provide the steps of:
- storing the detected values into at least one hystorical database;
- displaying the values stored in the hystorical database in at least one graph.

With reference to the previously-described process steps, the following Table 1 includes, as a non-limiting example, some actions for feed-back control imposed by the process according to the present invention on the energetic system 1 components:

**Table 1**

| **Detected value** | **Feed-back control** |
|---|---|
| Air and hydrogen pressures as input to the pile 15 | n case of too low a value, n alarm is triggered which locks the whole system aking it back in safety onditions. |
| Outlet air temperature | n case of too high a value, n alarm is triggered which locks the whole system aking it back in safety onditions. |
| Outlet hydrogen pressure from the pile 15 | n case of too high a value, n alarm is triggered which locks the whole system aking it back in safety onditions. |
| Pile 15 power | n case of too high a value, n alarm is triggered which locks the whole system aking it back in safety onditions. |
| Pile 15 voltage | n case of too low a value, n alarm is triggered which locks the whole system aking it back in safety onditions. |

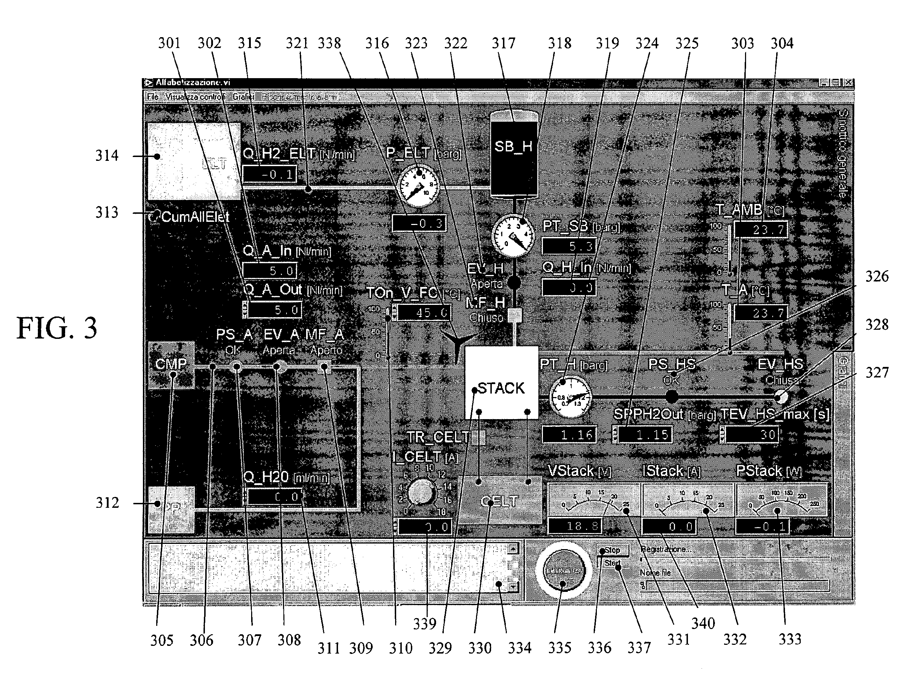

The invention also refers to a computer program comprising computer program code means adapted to carry out all steps of the above described process when such program is run on a computer. With reference in particular to FIG. 3, it is possible to note an embodiment of a screen of the program according to the present invention: such screen shows a general synoptic diagram of the energetic system managed by the process according to the present invention and implemented by the program which displays the functional diagram of the energetic system, in particular the energetic system 1, all parameters which can be checked and detected, and the states of the system components.

For example, in the synoptic diagram in FIG. 3, data are displayed related to:
- controlled air flow-rate 301;
- detected air flow-rate 302;
- outlet air temperature 303;
- ambient temperature 304;
- compressor 305;
- air supply line 306;
- electromechanical pressure sensor 307;
- second solenoid valve 308;
- second flow-rate controller 309;
- limit outlet air temperature 310;
- water flow-rate 311;
- peristaltic pump 312;
- global electrolyzer alarms 313;
- electrolyzer 314;
- electrolyzer flow-rate 315;
- electrolyzer pressure 316;
- hydrogen tank 317;
- hydrogen tank pressure 318;
- detected hydrogen flow-rate 319;
- hydrogen supply line 321;
- first solenoid valve 322;
- first flow-rate controller 323;
- anode pressure 324;
- set anode pressure 325;
- third pressure transducer 326;
- draining frequency 327;
- third solenoid valve 328;
- pile 329;
- electronic load 330;
- pile voltage 331;
- pile current 323;
- pile power 333;
- alarm indicator 334;
- emergency push-button 335;
- stop push-button 336;
- start push-button 337;
- fan 338;
- required current 339;
- detected current 340.

With reference now to Table 2, it is possible to note, as a non-limiting example, a list of possiiblities for which the process according to the present invention could activate an alarm signal by displaying it, for example, on the screen of the program in FIG. 3 with a related code:

**Table 2**

| **Code** | **Alarm description** |
|---|---|
| Emergency | Emergency button for completely stopping the energetic system 1 when pressed |
| PresSwOss | Lack of input pressure on oxidant side |
| PresSwH2 | Output overpressure on H₂ side |
| TempOss | Oxidant overtemperature (too high pile temperature) |
| VPile | Too low pile voltage |
| IPile | Too high pile current |
| POutH2Max | Output overpressure on H₂ side |
| POutH2Min | Low output pressure on H₂ side - disconnected sensor or insufficient pressure |
| PSerbH2 | Lack of pressure in hydrogen tank |
| TEVSpurgoH2 | System inactivity |
| TCOss | Disconnected oxidant thermocouple |
| SwWatchDog | Software watchdog |
| Software error | Not provided error: error in queues or in output writing/reading |

The invention also refers to a computer program as defined and contained in a computer readable medium.

## Claims

1. Fuel-cell energetic system (1) comprising at least one una pile (15) of fuel cells, means for supplying hydrogen (9), water (10) and air (11) to said pile (15), means for expelling reaction products (17), **characterised in that** it comprises means for producing said hydrogen (3) and controlling and managing means (19).

2. Energetic system (1) according to claim 1, **characterised in that** said means for supplying hydrogen (9) comprise means for storing said hydrogen (5).

3. Energetic system (1) according to claim 1, **characterised in that** said means for supplying water (10) comprise means for storing water (7).

4. Energetic system (1) according to claim 1, **characterised in that** said means for producing said hydrogen (3) comprise an electrolyzer (31).

5. Energetic system (1) according to claim 2, **characterised in that** said means for storing said hydrogen (5) comprise at least one first tank (51) of said hydrogen.

6. Energetic system (1) according to claim 1, **characterised in that** said means for supplying hydrogen comprise a first solenoid valve (91) and a first flow-rate controller (93) arranged in series along a first duct (100) connecting said first tank (51) to an anode (151) of said pile (15).

7. Energetic system (1) according to claim 1, **characterised in that** said means for supplying said air (11) comprise at least one compressor (111), a second tank, a second solenoid valve (113) and a second flow-rate controller (115) arranged in series along a second duct (102) connecting said second tank to an air/water mixer (103).

8. Energetic system (1) according to claim 3, **characterised in that** said means for storing said water (7) comprise a third tank (71) of said water.

9. Energetic system (1) according to claim 1, **characterised in that** said means for supplying said water (10) comprise at least one peristaltic pump (101) and said air/water mixer (103) arranged in series downstream of said third tank (71) along a third duct (104).

10. Energetic system (1) according to claim 1, **characterised in that** said air/water mixer (103) is connected to a cathode (153) of said pile (15) through a fourth duct (106).

11. Energetic system (1) according to claim 1, **characterised in that** said pile (15) is a pile with twenty fuel cells with Nafion® polymeric membrane 112, bipolar graphite plates and platinum catalyst.

12. Energetic system (1) according to claim 1, **characterised in that** said pile (15) funziona in modalità dead end.

13. Energetic system (1) according to claim 1, **characterised in that** said pile (15) is cooled by a cooling fan (155).

14. Energetic system (1) according to claim 1, **characterised in that** said means for expelling reaction products (17) comprise a fourth duct (108) for expelling exhaust air from said cathode (153) equipped with a second thermocouple (173) for measuring the air temperature and connected to an exhaust tank.

15. Energetic system (1) according to claim 1, **characterised in that** said means for expelling reaction products (17) comprise a third draining solenoid valve (175) along a fifth duct (110) for expelling exhaust hydrogen.

16. Energetic system (1) according to claim 1, **characterised in that** said controlling and managing means (19) comprise a first pressure transducer (191) of said first tank (51), a second analogue pressure transducer (193) upstream of said first solenoid valve (91), a first electromechanical pressure sensor (117) upstream of said second solenoid valve (113), a first thermocouple for measuring a temperature of said pile (15), a second thermocouple (173) for measuring a temperature of said exhaust air, a third pressure transducer (177) for measuring a pressure of said exhaust hydrogen and a second electromechanical pressure sensor (179) in parallel with said third solenoid valve (175).

17. Energetic system (1) according to claim 1, **characterised in that** said controlling and managing means (19) operatively drive said first solenoid valve (91), said second solenoid valve (113), said cooling fan (155) and said third draining solenoid valve (175).

18. Energetic system (1) according to claim 1, **characterised in that** it comprises an electronic load (200) supplied by said pile (15) .

19. Process for controlling and managing an energetic system (1) according to any one of the previous claims, **characterised in that** it comprises the steps of:
- detecting flow-rate and pressure values of said means for producing said hydrogen (3);
- detecting hydrogen flow-rate values of said means for supplying said hydrogen (9);
- comparing said detected pressure and flow-rate values of said means for producing said hydrogen (3) and said means for supplying said hydrogen (9) with threshold values;
- checking pressure and flow-rate of said means for producing said hydrogen (3) and/or said means for supplying said hydrogen (5) if said detected pressure and flow-rate values are not complying with said thresholds;
- detecting water flow-rate values of said means' for supplying said water (10);
- comparing said flow-rate values of said means for supplying said water (10) with threshold values;
- checking a flow-rate of said means for supplying said water (10) if said detected flow-rate values are not complying with said thresholds;
- detecting air flow-rate values of said means for supplying said air (11);
- comparing said detected flow-rate values of said means for supplying said air (11) with threshold values;
- checking a flow-rate of said means for supplying said air (11) if said detected pressure and flow-rate values are not complying with said thresholds;
- detecting temperature values of said pile (15);
- detecting ambient temperature values;
- comparing said detected temperature values of said pile (15) with threshold values and/or with said ambient temperature values;
- checking a temperature of said pile (15) if said detected temperature values are not complying with said thresholds;
- detecting voltage, current and power values of said pile (15);
- comparing said voltage, current and power values of said pile (15) with threshold values;
- checking voltage, current and power of said pile (15) if said detected voltage, current and power values are not complying with said thresholds;
- detecting temperature and pressure values of said means for expelling reaction products (17);
- comparing said detected temperature and pressure values of said means for expelling reaction products (17) with threshold values;
- checking temperature and pressure of said means for expelling reaction products (17) if said detected temperature and pressure values are not complying with said thresholds;
- detecting pressure values of said pile (15);
- comparing said detected pressure values of said pile (15) with threshold values;
- checking a pressure of said pile (15) if said detected pressure values are not complying with said thresholds.

20. Process according to claim 19 **characterised in that** it comprises the steps of:
- starting said energetic system (1) by opening said solenoid valves (91, 113) allowing an inflow of said hydrogen and said air to said pile (15);
- stopping said energetic system (1) by closing said solenoid valves (91, 113) stopping said inflow of said hydrogen and said air to said pile (15);
- emergency stopping said energetic system (1) by deactivating all its components.

21. Process according to claim 19 **characterised in that** it comprises the steps of:
- storing said detected values in at least one hystorical database;
- displaying said values stored in said hystorical database in at least one graph.

22. Computer program comprising computer program code means adapted to carry out all steps of the process according to any one of claims 19 to 21 when such program is run on a computer.

23. Computer program according to claim 22 and contained in a computer readable medium.
